# EUROPÄISCHE PATENTSCHRIFT

(11) **EP 2 054 640 B1**
(45) Veröffentlichungstag und Bekanntmachung des Hinweises auf die Patenterteilung: **20.01.2010**
(21) Anmeldenummer: 07801753.0
(22) Anmeldetag: 18.08.2007
(51) Int. Cl.: F16D 66/00, F16D 66/02

(54) **BREMS- ODER KUPPLUNGSBELAG MIT VERSCHLEISS- UND TEMPERATURERMITTLUNGSEINHEIT**
BRAKE OR CLUTCH LINING COMPRISING A WEAR AND TEAR AND TEMPERATURE DETERMINATION UNIT
GARNITURE DE FREIN OU D'EMBRAYAGE MUNIE D'UNE UNITÉ DE DÉTERMINATION DE L'USURE ET DE LA TEMPÉRATURE

(30) Priorität: 23.08.2006 DE 102006039591
(43) Veröffentlichungstag der Anmeldung: 06.05.2009
(73) Patentinhaber: TMD Friction Services GmbH, 51381 Leverkusen (DE)
(72) Erfinder: DEGENSTEIN, Thomas, 55130 Mainz (DE); BERGER, Erik, 65510 Idstein (DE); ELVENKEMPER, Andreas, 51375 Leverkusen (DE)
(74) Vertreter: Müller, Eckhard
(86) Internationale Anmeldenummer: PCT/EP2007/007313
(87) Internationale Veröffentlichungsnummer: WO 2008/022753

(56) Entgegenhaltungen:
- WO-A-99/57451
- DE-A1- 4 108 622
- DE-A1- 19 812 554
- US-A- 3 689 880
- US-A- 3 975 706

## Beschreibung

Die Erfindung betrifft einen Brems- oder Kupplungsbelag mit einem auf einer Trägerplatte angeordneten Reibbelag und mit Mitteln zur Erfassung einer kritischen Betriebstemperatur des Brems- bzw. Kupplungsbelags.

### Stand der Technik

Brems- oder auch Kupplungsverschleißanzeigen sind als solche aus dem Stand der Technik bekannt. Sie ermöglichen eine Erfassung oder Ermittlung einer kritischen Verschleißgrenze eines Reibbelags, bevor die mit dem Brems- oder Kupplungsbelag erreichbare Brems- bzw. Kupplungswirkung unter ein zulässiges Mindestmaß abfällt.

Weiterhin sind Temperaturermittlungseinheiten für Bremsbeläge bekannt, die die aktuelle Temperatur im Bremsbelag zur Verfügung stellen, um zum einen eine Verschleißvoraussage zuverlässig bestimmen zu können und zum anderen Voraussagen bezüglich der Bremswirkung in Abhängigkeit vom aufgebrachten Bremsdruck zwischen dem Bremsbelag und der Bremsscheibe treffen zu können.

Aus der US 3 975 706 A ist ein Bremsbelag mit einem Sensor zur Messung der kritischen Temperatur des Bremssystems gemäß dem Oberbegriff des Anspruchs 1 bekannt.

So beschreibt beispielsweise die DE 100 45 219 A1 einen grundsätzlichen Aufbau einer mehrstufigen Bremsverschleißanzeige einschließlich einer Temperatur-Ermittlungseinheit, für welche lediglich zwei elektrische

Anschlüsse vorgesehen sind. Über diese kann ein Stromfluss über in Reihe geschaltete Widerstände zur Ermittlung des Verschleißes einerseits sowie zur Ermittlung der Temperatur andererseits erfolgen. Aus einer feststellbaren elektrischen Widerstandsänderung kann hierbei entweder auf einen erfolgten Verschleiß oder auf eine Temperaturänderung geschlossen werden.

Weiterhin beschreibt die DE 100 45 219 A1 eine diskontinuierliche Messung und Auswertung, wobei der nach einem Bremsvorgang ermittelte elektrische Gesamt-Widerstandswert mit dem vor diesem Bremsvorgang vorliegenden Gesamt-Widerstandswert verglichen und durch logische Auswertung darauf geschlossen wird, ob ein Anteil der Änderung des Gesamt-Widerstandswertes auf eine Änderung bei den Verschleißermittlungs-Widerständen zurückzuführen ist, woraus letztlich auf die durch den Bremsvorgang hervorgerufene Temperaturerhöhung geschlossen werden kann.

Derartige Temperatur- und Verschleißermittlungseinheiten weisen einen relativ komplexen Aufbau auf. Die zu ermittelnden Größen Temperatur und Verschleiß gehen nicht unmittelbar aus den messbaren elektrischen Signalen hervor, sondern können lediglich durch eine relativ aufwändige Auswertung näherungsweise geschätzt werden. Die Auswertung erhaltener Signale bezüglich Temperatur und Verschleißzustand erfolgt mittels intelligenter Software und über vernetzte Informationen aus dem umgebenden Datennetz des Fahrzeuges. Zur Bestimmung von Temperatur und/oder Verschleiß des Bremsbelags müssen folglich eine Vielzahl von Fahrzeugparametern ermittelt und verarbeitet werden.

Des Weiteren können bei starken Belastungen einer Fahrzeugbremse, wie etwa bei einer Vollbremsung aus hohen Fahrzeuggeschwindigkeiten, besonders hohe Temperaturen an der Reibfläche des Bremsbelags entstehen. Mitunter kann sich der gesamte Reibbelag derart aufheizen, dass sogar die Klebeschicht, mittels derer der Reibbelag mit der Trägerplatte verbunden ist, aufweicht oder in ihrer Wirkung stark beeinträchtigt wird.

Dies kann zu einem Lösen des Reibmaterials von der Belagträgerplatte und somit zu einem Totalausfall der Bremse oder eines Kupplungsbelags führen.

### Aufgabe

Die Erfindung hat daher die Aufgabe, eine solch kritische Betriebstemperatur im Reibbelag und insbesondere in der Nähe der Klebefläche zu detektieren, damit der Anwender oder eine Steuerungs- oder Überwachungselektronik, wie etwa die Bordelektronik eines Fahrzeuges entsprechende Vorsichts- bzw. Warn- oder Gegenmaßnahmen einleiten kann.

Der vorliegenden Erfindung liegt weiterhin die Aufgabe zugrunde, eine vereinfachte, kostengünstigere und präzise Ermittlung einer kritischen Betriebstemperatur des Reibbelags zu ermöglichen.

In einer Weiterbildung soll die Erfindung einfache und kostengünstig zu realisierende Mittel, sowohl zur Ermittlung einer kritischen Betriebstemperatur als auch zur Ermittlung einer Verschleißgrenze des Reibbelags zur Verfügung stellen.

### Erfindung und vorteilhafte Wirkungen

Das der Erfindung zugrunde liegende Problem wird mittels eines Brems- oder Kupplungsbelags gemäß Patentanspruch 1 gelöst. Weitere vorteilhafte Ausführungsformen der Erfindung sind in den Unteransprüchen angegeben.

Der erfindungsgemäße Brems- oder Kupplungsbelag weist eine Trägerplatte und einen daran angeordneten Reibbelag auf. Zur Erfassung einer kritischen Betriebstemperatur des Reibbelags bzw. der Temperatur der Klebeschicht zwischen Reibbelag und Trägerplatte ist an zumindest einer Stelle im Reibbelag ein elektrisch leitendes Material vorgesehen, das eine Phasenübergangstemperatur aufweist, die im Bereich der zu ermittelnden oder zu detektierenden kritischen Betriebstemperatur des Reibbelags liegt.

Vorzugsweise hat das im Reibbelag angeordnete Material eine Phasenübergangstemperatur unterhalb der kritischen Betriebstemperatur, so dass bei einem Aufheizen des Reibbelags beispielsweise infolge starker mechanischer Beanspruchung, bereits vor Erreichen der für die Klebeschicht oder den Reibbelag kritischen Betriebstemperatur das Material einen Phasenübergang vollzieht, welcher anhand elektrischer Signale detektiert und entsprechend weiterverarbeitet werden kann.

Das im Reibbelag angeordnete Material ist so beschaffen, dass der bei der kritischen Betriebstemperatur stattfindende Phasenübergang mit einer Änderung des elektrischen Widerstandes des Materials einhergeht oder dass der Phasenübergang zu einer Änderung der Beschaffenheit des Materials führt, die anhand elektrischer Signale erfassbar ist.

Unter einem Phasenübergang bzw. der damit einhergehenden Phasenübergangstemperatur im Sinne der Erfindung ist die qualitative Zustandsänderung eines Materials bei Variation der Außenbedingungen, wie etwa Temperatur, Druck, Magnetfeld usw. zu verstehen. Mit Phasenübergang im Sinne der Erfindung sind insbesondere Aggregatzustandsänderungen von chemischen Elementen oder Stoffgemischen gemeint. Hierunter sind insbesondere die typischen Aggregatzustandsänderungen und Phasenübergänge wie Schmelzen, Verdampfen, Sublimieren, Erstarren, Kondensieren oder Resublimieren, aber auch strukturelle Phasenübergänge, wie Wechsel der Kristallstruktur, Wechsel zwischen ferro- und paramagnetischem Verhalten, Wechsel zwischen verschiedenen magnetischen Ordnungen oder gar Wechsel zwischen ferro- und dielektrischem Verhalten gemeint.

Die Erfindung kann gleichermaßen universell sowohl in Reibbelägen für Bremsen als auch in Reibbelägen für Kupplungen eingesetzt werden. Mögliche Einsatzgebiete für die erfindungsgemäße Temperatur- und/oder Verschleißermittlung von Reibbelägen sind neben Scheiben-und Trommelbremsen sowohl Reib-, Trenn- und Rutschkupplung, insbesondere im Nutzfahrzeugbereich sowie im Werkzeugmaschinenbau und in der Fördertechnik.

Nach einer ersten vorteilhaften Ausführungsform der Erfindung sind in unmittelbarer Umgebung des Materials im Reibbelag die freien Enden zweier elektrischer Leiter angeordnet. Diese Leiter-Enden sind in Bezug zur Position und zur Geometrie des Materials derart angeordnet, dass der zwischen den elektrischen Leitern messbare elektrische Widerstand infolge des Phasenübergangs des Materials eine Änderung erfährt.

Hierbei ist insbesondere vorgesehen, dass die Leiter-Enden über das elektrisch leitende Material miteinander verbunden sind. Infolge eines Phasenübergangs des Materials wird diese Verbindung zwischen den Leiter-Enden unterbrochen, zumindest aber derart beeinträchtigt, dass sich der Widerstand zwischen den elektrischen Leiter-Enden messbar verändert. So kann beispielsweise durch den Phasenübergang ein Stromfluss durch die beiden elektrischen Leiter unterbrochen oder aber hergestellt werden.

Nach einer weiteren Ausführungsform der Erfindung schmilzt das im Reibbelag angeordnete Material bei Erreichen oder vor Erreichen der kritischen Betriebstemperatur. In diesem Fall ist vorgesehen, dass das geschmolzene Material, zum Beispiel bedingt durch die Schwerkraft, eine Änderung seiner Kontur erfährt, der zu Folge eine elektrische Verbindung zwischen den beiden elektrischen Leitern unterbrochen wird.

Diese Unterbrechung kann durch eine mit den beiden elektrischen Leitern verbundene Steuer- oder Kontrollelektronik in einfacher Art und Weise detektiert bzw. registriert werden, so dass entsprechende Gegenmaßnahmen ohne aufwändige Signalverarbeitung unmittelbar eingeleitet werden können, wie zum Beispiel die Anzeige an den Fahrer.

Hierbei kann auch alternativ vorgesehen werden, dass die Leiter-Enden im Ausgangszustand des Brems- oder Kupplungsbelags nicht in das leitende und schmelzbare Material hineinragen, sondern derart zueinander angeordnet sind, dass erst bei einem Aufschmelzen des Materials eine elektrische Verbindung zwischen den Leiter-Enden hergestellt wird, die in analoger Art und Weise mittels der Kontrollelektronik erfasst und verarbeitet werden kann.

Geeignete Materialien sind zum Beispiel Metalle und Legierungen, aber auch organische elektrisch leitende Materialien mit einer für die vorgesehene Funktionsweise geeigneten Schmelztemperatur.

Nach einer Weiterbildung ist der Brems- oder Kupplungsbelag nicht auf Materialien beschränkt, die bei oder vor Erreichen der kritischen Betriebstemperatur schmelzen. Es können auch solche Materialien Verwendung finden, die bei Erreichen oder vor Erreichen der kritischen Betriebstemperatur verdampfen oder gar sublimieren.

Von Vorteil ist weiterhin, dass das elektrisch leitende Material in einem im Reibbelag vorgesehenen Gehäuse angeordnet ist. Dieses Gehäuse besteht vorzugsweise aus nicht leitendem Material. Die beiden Leiter-Enden sind in das Gehäuse hineinragend mit diesem verbunden. Dieses das schmelzbare Material aufweisende Gehäuse kann bereits vor einem Press- oder Härtevorgang bei der Herstellung des Brems- oder Kupplungsbelags mit der Trägerplatte verbunden, zumindest aber auf dieser angeordnet werden.

Mit Hilfe des Gehäuses können die bei einem Press- und/oder Härtevorgang auftretenden mechanischen Beanspruchungen auf das im Reibbelag eingebrachte Material wirksam abgeschirmt werden. Somit kann eine Beeinträchtigung der Funktionsweise der Mittel zur Erfassung der kritischen Betriebstemperatur während des Herstellungsprozesses des Brems- oder Kupplungsbelags weitgehend ausgeschlossen werden.

Zudem bietet die Anordnung des Materials innerhalb eines Gehäuses eine Montageerleichterung und ermöglicht zudem eine modulare Fertigung der Mittel zur Betriebstemperaturerfassung. Diese können beispielsweise separat vorgefertigt werden.

Nach einem weiteren Aspekt der Erfindung ist unmittelbar an das Material angrenzend ein Hohlraum im Reibbelag bzw. in dem Gehäuse vorgesehen. Dieser Hohlraum ermöglicht, dass das infolge des Phasenübergangs aufschmelzende Material eine Änderung seiner äußeren Konturen und/oder seiner Geometrie erhält. Liegt das Material beispielsweise als Festkörper im Reibbelag vor, befindet sich der Hohlraum unterhalb des Materials oder ragen die Leiter-Enden von oben oder von der Seite in das Material hinein, so kommt es bei einem Aufschmelzen des Materials infolge einer Schwerkraft bedingten Positionsänderung durch ein zerfließen des aufschmelzenden Materials zu einer Unterbrechung der elektrischen Verbindung zwischen den beiden Leiter-Enden.

Je nach Ausführung des Materials kann sich der an das Material angrenzende Hohlraum entweder direkt im Reibbelag oder aber innerhalb des Gehäuses befinden, in welchem das Material angeordnet ist. So füllt das elektrisch leitende und vorzugsweise vor Erreichen der Betriebstemperatur aufschmelzende und wegfließende Material nicht den gesamten Innenraum einer für das Material im Reibbelag vorgesehenen Ausnehmung oder in entsprechender Weise nicht den gesamten Innenraum des Gehäuses aus.

Nach einer weiteren bevorzugten Ausführungsform der Erfindung ist das Material unmittelbar angrenzend an die Belagträgerplatte angeordnet. Somit kann auf besonders einfache und zuverlässige Art und Weise die für die Klebeschicht kritische Temperatur erfasst werden. Hierzu sind, anders als im Stand der Technik, keine Schätzungen oder komplizierte Auswertungen von Messsignalen erforderlich, sondern das Schmelzen des elektrisch leitenden Materials und die damit verbundene Widerstandsänderung zwischen den elektrischen Leitern ist ein direktes Indiz für das Vorliegen einer kritischen Temperatur des Brems- oder Kupplungsbelags bzw. dessen Klebeschicht.

Nach einer weiteren vorteilhaften Ausführungsform der Erfindung kann das Material durch eine Ausnehmung in der Trägerplatte in den Reibbelag eingebracht werden. So kann beispielsweise die Anordnung des schmelzbaren Materials innerhalb der Reibbelagstruktur von hinten durch die Trägerplatte hindurch erfolgen.

Dies hat den Vorteil, dass zum einen konventionelle Brems- oder Kupplungsbeläge mit der'erfindungsgemäßen Ermittlungseinheit nachgerüstet werden können. Zum anderen kann die Anordnung oder das Einbringen des Materials in den Reibbelag auch nach einem für die Herstellung des Brems- oder Kupplungsbelags vorgesehenen Press- oder Härtvorgang erfolgen.

Da solche Press- bzw. Härtevorgänge zumeist auch unter Temperatureinwirkung stattfinden, kann auf diese Art und Weise eine Beeinträchtigung der Funktionsweise des Materials bei der Herstellung des Brems- oder Kupplungsbelags umgangen werden.

Nach einer weiteren vorteilhaften Ausführungsform der Erfindung verläuft zumindest einer der elektrischen Leiter über oder an eine Verschleißgrenze des Reibbelags. Dieser elektrische Leiter verläuft demnach zwischen dem schmelzbaren Material und der Verschleißgrenze zumindest bereichsweise parallel zur Flächennormalen der Trägerplatte oder zumindest schräg zu dieser. Der andere elektrische Leiter verläuft hingegen vorzugsweise parallel zur Trägerplatte und führt vorzugsweise nach oben oder zur Seite aus dem Reibbelag heraus.

Bei Erreichen der Verschleißgrenze des Reibbelags erfährt der über die Verschleißgrenze verlaufende oder diese zumindest touchierende elektrische Leiter eine mechanische Beschädigung, der zur Folge ein durch die beiden Leiter und durch das Material erfolgender elektrischer Stromfluss unterbrochen wird. Auf diese Art und Weise kann mit einfachen Mitteln und mit lediglich zwei in den Reibbelag hineinführenden elektrischen Kontakten oder Leitern sowohl eine kritische Temperatur als auch das Erreichen einer Verschleißgrenze des Reibbelags zuverlässig bestimmt werden.

Nach einer weiteren vorteilhaften Ausführungsform der Erfindung ist vorgesehen, dass im Reibbelag zwei zueinander parallel geschaltete elektrische Widerstände vorgesehen sind, wobei der Leiter eines Zweigs der Parallelschaltung über die Verschleißgrenze des Reibbelags verläuft, und wobei in dem anderen Zweig der Parallelschaltung das schmelzbare oder verdampfbare Material vorgesehen ist. Die beiden parallel geschalteten Widerstände weisen unterschiedliche Widerstandswerte auf, so dass unmittelbar und eindeutig festgestellt werden kann, ob entweder die kritische Betriebstemperatur oder die Verschleißgrenze des Reibbelags erreicht ist.

Demgemäß wird entweder der Stromfluss durch den einen oder den anderen Zweig der Parallelschaltung vorzugsweise unterbrochen, was abhängig vom Widerstandswert des im jeweils unterbrochenen Zweigs der Parallelschaltung zu unterschiedlichen messbaren elektrischen Signalen führt.

Die elektrischen Widerstände müssen hierzu nicht notwendigerweise in dem Reibbelag angeordnet sein. Sie können z.B. auch außerhalb des Reibbelags im jeweiligen Ast der Parallelschaltung angeordnet sein.

### Ausführungsbeispiele

Weitere Ziele, Merkmale sowie vorteilhafte Anwendungsmöglichkeiten der vorliegenden Erfindung werden in der nachfolgenden Beschreibung von Ausführungsbeispielen anhand der Zeichnungen erläutert. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbeziehung.

### Es zeigen:

- Figur 1: eine schematische Darstellung des Brems- oder Kupplungsbelags in Draufsicht,
- Figur 2: den Brems- oder Kupplungsbelag gemäß Figur 1 im Querschnitt,
- Figur 3: eine Ausführungsform des Brems- oder Kupplungsbelags für gleichzeitige Verschleiß- und Temperaturermittlung und
- Figur 4: eine schematische Darstellung eines Parallel-Stromkreises zur selektiven Ermittlung der Verschleiß- oder Temperaturgrenzen.

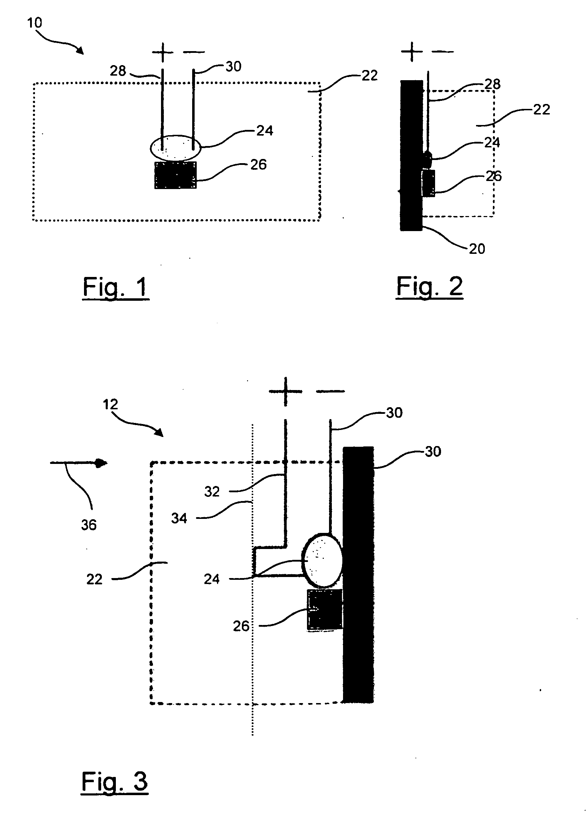

Die Figuren 1 und 2 zeigen einen Brems- bzw. Kupplungsbelag 10 in einer schematischen Darstellung mit einer Belagträgerplatte 20 und einem darauf angeordneten Reibbelag 22. In der Aufsicht gemäß Figur 1 ist deutlich zu erkennen, dass im Reibbelag 22 ein schmelzbares oder verdampfbares Material 24 und ein daran unmittelbar angrenzender Hohlraum 26 vorgesehen sind.

Dieser hier leicht elliptisch geformte Körper 24 und der darunter liegende Hohlraum 26 kommen unmittelbar an der Trägerplatte 20 und somit unmittelbar an der Klebeschicht zwischen Trägerplatte 20 und Reibbelag 22 zu liegen.

Der Körper 24 besteht aus einem elektrisch leitenden Material, das im Bereich einer für den Betrieb der Bremse oder Kupplung kritischen Temperatur einen Phasenübergang aufweist. Hierbei ist insbesondere vorgesehen, dass das Material 24 kurz vor Erreichen der insbesondere für die Klebeschicht kritischen Temperatur schmilzt und bedingt durch die Schwerkraft in den darunter liegenden Hohlraum 26 abfließt.

Findet ein solcher Schmelzvorgang statt, so wird der elektrische Kontakt zwischen den Enden der beiden Leiter 28 und 30 unterbrochen. Diese Unterbrechung kann unmittelbar von der Bordelektronik erfasst werden, so dass diese selbsttätig entsprechende Gegenmaßnahmen einleiten und/oder den Fahrer des Fahrzeuges über den kritischen Betriebszustand informieren bzw. entsprechende Warnhinweise oder Vorsichtsmaßnahmen einleiten kann.

Die Anordnung und Geometrie der beiden elektrischen Leiter 28, 30 sowie des Hohlraums 26 und des Schmelzkörpers 24 kann unterschiedlich gestaltet werden. So ist es insbesondere auch möglich, dass die beiden Leiter 28, 30 von unten in den Hohlraum 26 hineinragend angeordnet sind, so dass erst bei einem Schmelzen und Wegfließen des Materials 24 ein elektrischer Kontakt zwischen den Leiter-Enden 28, 30 hergestellt wird.

Weiterhin ist es denkbar, den Brems- oder Kupplungsbelag 10 ohne einen an das schmelzbare Material 24 angrenzenden Hohlraum 26 auszubilden, sofern das geschmolzene oder gar verdampfte Material 24 aus dem Bereich der freien Enden der beiden Leiter 28, 30 entweichen kann.

Weiterhin ist es möglich, dass der bei einer vorgegebenen Temperatur stattfindende Phasenübergang des Materials 24 per se zu einer sprunghaften bzw. diskontinuierlichen Änderung des elektrischen Widerstands des Materials 24 führt, was wiederum unmittelbar von einer Auswerteelektronik in einfacher Art und Weise festgestellt werden kann, ohne dass hierzu ein Abfließen des geschmolzenen Material notwendig wäre.

Figur 2 zeigt eine Querschnittsdarstellung eines weiteren Ausführungsbeispiels, welches sowohl zur Ermittlung der kritischen Betriebstemperatur als auch zur Erfassung einer Verschleißgrenze 34 des Reibbelags 22 dient. Dieser Brems- bzw. Kupplungsbelag 12 weist ebenso eine Belagträgerplatte 20 und einen daran angeordneten Reibbelag 22 auf. Einzig der Leiter 32 verläuft nicht geradlinig, wie etwa der Leiter 30 von außen in den Schmelzkörper 24 hinein, sondern weist einen Verlauf auf, der über die Verschleißgrenze 34 hinweg geht oder daran angrenzt.

Im fortwährenden Betrieb der Bremse bzw. Kupplung wird der Reibbelag 22 entlang der durch den Pfeil 36 angedeuteten Verschleißrichtung zunehmend abgetragen. Bei Erreichen der Verschleißgrenze 34 wird der elektrische Leiter 32 bereichsweise zerstört bzw. abgetragen, wodurch ein durch die Leiter 32, 30 und durch den Schmelzkörper 24 fließender Stromfluss unterbrochen wird. Eine vergleichbare Stromunterbrechung tritt ein, wenn der Reibbelag 22 bereits vor Erreichen der Verschleißgrenze 34 eine derartige Erwärmung erfährt, durch welche der Schmelzkörper 24 aufschmilzt und in den Hohlraum 26 hineinfließt.

Dieser in Figur 3 schematisch abgebildete Reibbelag ermöglicht mit einfachen Mitteln eine präzise und zuverlässige Erfassung von sowohl einer kritischen Betriebstemperatur als auch die Erfassung einer erreichten Verschleißgrenze-.

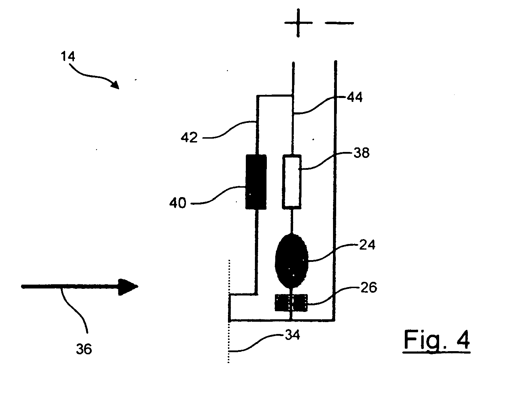

Das in Figur 4 schematisch dargestellte Blockschaltbild 14 einer Parallelschaltung, die zumindest bereichsweise innerhalb eines Reibbelags 22 angeordnet ist, weist zwei unterschiedliche Widerstände 38, 40 auf, die es ermöglichen sowohl eine Verschleißgrenze als auch eine kritische Betriebstemperatur separat zu erfassen. So wird bei Erreichen der Verschleißgrenze 34 der linke Zweig 42 der Parallelschaltung unterbrochen, so dass ein Stromfluss einzig über den Widerstand 38 und über den Schmelzkörper 24 erfolgt.

Wird hingegen die kritische Betriebstemperatur des Brems- bzw. Kupplungsbelags erreicht, so wird infolge des Wegschmelzens des Schmelzkörpers 24 der rechte Zweig 44 der Parallelschaltung unterbrochen. Da die beiden Widerstände 38, 40 unterschiedliche ohmsche Widerstände aufweisen, kann die Änderung des messbaren elektrischen Signals unmittelbar darüber Aufschluss geben, ob entweder die kritische Betriebstemperatur oder ob etwa die Verschleißgrenze des Brems- oder Kupplungsbelags erreicht worden ist.

### Bezugszeichenliste

- 10: Brems- / Kupplungsbelag
- 12: Brems- / Kupplungsbelag
- 14: Stromkreis
- 20: Belagträgerplatte
- 22: Reibbelag
- 24: Schmelzkörper
- 26: Hohlraum
- 28: Elektrischer Leiter
- 30: Elektrischer Leiter
- 32: Elektrischer Leiter
- 34: Verschleißgrenze
- 36: Verschleißrichtung
- 38: Elektrischer Widerstand

## Patentansprüche

1. Brems- oder Kupplungsbelag mit einem auf einer Trägerplatte (20) angeordneten Reibbelag (22) und mit Mitteln (28, 30, 24; 32) zur Erfassung einer kritischen Betriebstemperatur, **dadurch gekennzeichnet, dass** an zumindest einer Stelle im Reibbelag ein elektrisch leitendes Material (24) mit einer Phasenübergangstemperatur im Bereich der kritischen Betriebstemperatur vorgesehen ist.

2. Brems- oder Kupplungsbelag nach Anspruch 1, **dadurch gekennzeichnet, dass** in unmittelbarer Umgebung des Materials (24) die Enden zweier elektrischer Leiter (28, 30, 32) angeordnet sind, derart, dass der zwischen den elektrischen Leitern (28, 30, 32) messbare elektrische Widerstand infolge des Phasenübergangs des Materials (24) eine Änderung erfährt.

3. Brems- oder Kupplungsbelag nach einem der vorhergehenden Ansprüche, **dadurch gekennzeichnet, dass** das Material (24) bei Erreichen der kritischen Betriebstemperatur schmilzt.

4. Brems- oder Kupplungsbelag nach einem der vorhergehenden Ansprüche 1 oder 2, **dadurch gekennzeichnet, dass** das Material (24) bei Erreichen der kritischen Betriebstemperatur verdampft.

5. Brems- oder Kupplungsbelag nach einem der vorhergehenden Ansprüche, **dadurch gekennzeichnet, dass** das Material (24) in einem im Reibbelag (22) vorgesehenen Gehäuse angeordnet ist.

6. Brems- oder Kupplungsbelag nach einem der vorhergehenden Ansprüche, **dadurch gekennzeichnet, dass** unmittelbar an das Material (24) angrenzend ein Hohlraum (26) vorgesehen ist.

7. Brems- oder Kupplungsbelag nach einem der vorhergehenden Ansprüche, **dadurch gekennzeichnet, dass** das Material (24) unmittelbar angrenzend an die Belagträgerplatte (20) angeordnet ist.

8. Brems- oder Kupplungsbelag nach einem der vorhergehenden Ansprüche, **dadurch gekennzeichnet, dass** das Material (24) durch eine Ausnehmung in der Trägerplatte (20) in den Reibbelag (22) einbringbar ist.

9. Brems- oder Kupplungsbelag nach einem der vorhergehenden Ansprüche, **dadurch gekennzeichnet, dass** zur Ermittlung einer Verschleißgrenze (34) des Reibbelags (22) zumindest einer der elektrischen Leiter (32) von dem Material (24) bis zu einer Verschleißgrenze (34) des Reibbelags verläuft.

10. Brems- oder Kupplungsbelag nach einem der vorhergehenden Ansprüche, **dadurch gekennzeichnet, dass** im Reibbelag (22) zwei parallel geschaltete elektrische Widerstände (38, 40) vorgesehen sind, wobei der Leiter (42) eines Zweigs der Parallelschaltung zumindest bereichsweise über oder an der Verschleißgrenze (34) des Reibbelags (22) verläuft und in dem anderen Zweig (44) der Parallelschaltung das Material (24) angeordnet ist.

## Claims

1. Brake or clutch lining with a friction lining (22) arranged on a carrier plate (20) and with means (28, 30, 24; 32) for detection of a critical operating temperature, **characterised in that** an electrically conductive material (24) with a phase transition temperature in the region of the critical operating temperature is provided at at least one position in the friction lining.

2. Brake or clutch lining according to claim 1, **characterised in that** the ends of two electrical conductors (28, 30, 32) are arranged in the immediate vicinity of the material (24) in such a manner that the electrical resistance measurable between the electrical conductors (28, 30, 32) experiences a change as a consequence of the phase transition of the material (24).

3. Brake or clutch lining according to one of the preceding claims, **characterised in that** the material (24) melts on attainment of the critical operating temperature.

4. Brake or clutch lining according to one of the preceding claims 1 and 2, **characterised in that** the material (24) evaporates on attainment of the critical operating temperature.

5. Brake or clutch lining according to any one of the preceding claims, **characterised in that** the material (24) is arranged in a housing provided in the friction lining (22).

6. Brake or clutch lining according to any one of the preceding claims, **characterised in that** a cavity (26) is provided directly adjoining the material (24).

7. Brake or clutch lining according to any one of the preceding claims, **characterised in that** the material (24) is arranged to directly adjoin the lining carrier plate (20).

8. Brake or clutch lining according to any one of the preceding claims, **characterised in that** the material (24) is introducible into the friction lining (22) through a recess in the carrier plate (20).

9. Brake or clutch lining according to any one of the preceding claims, **characterised in that** for determination of a wear boundary (34) of the friction lining (22) at least one of the electrical conductors (32) extends from the material (24) up to a wear boundary (34) of the friction lining.

10. Brake or clutch lining according to any one of the preceding claims, **characterised in that** two electrical resistances (38, 40) connected in parallel are provided in the friction lining (22), wherein the conductor (42) of a branch of the parallel circuit runs at least in regions over or at the wear boundary (34) of the friction lining (22) and the material (24) is arranged in the other branch (44) of the parallel circuit.

## Revendications

1. Garniture de frein ou d'embrayage qui présente une garniture de frottement (22) disposée sur une plaque de support (20) et des moyens (28, 30, 24; 32) de détection d'une température critique de fonctionnement,
**caractérisée en ce que**
un matériau électriquement conducteur (24) dont la température de transition de phase est du même ordre de grandeur que la température critique de fonctionnement est prévu en au moins un emplacement de la garniture de frottement.

2. Garniture de frein ou d'embrayage selon la revendication 1, **caractérisée en ce que** les extrémités de deux conducteurs électriques (28, 30, 32) sont situées dans l'environnement immédiat du matériau (24), de telle sorte que la résistance électrique que l'on peut mesurer entre les conducteurs électriques (28, 30, 32) subit une modification suite au changement de phase du matériau (24).

3. Garniture de frein ou d'embrayage selon l'une des revendications précédentes, **caractérisée en ce que** le matériau (24) fond lorsque la température critique de fonctionnement est atteinte.

4. Garniture de frein ou d'embrayage selon l'une des revendications 1 ou 2 qui précèdent, **caractérisée en ce que** le matériau (24) s'évapore lorsque la température critique de fonctionnement est atteinte.

5. Garniture de frein ou d'embrayage selon l'une des revendications précédentes, **caractérisée en ce que** le matériau (24) est disposé dans un boîtier prévu dans la garniture de frottement (22).

6. Garniture de frein ou d'embrayage selon l'une des revendications précédentes, **caractérisée en ce qu'**une cavité (26) est prévue en contact direct avec le matériau (24).

7. Garniture de frein ou d'embrayage selon l'une des revendications précédentes, **caractérisée en ce que** le matériau (24) est disposé en contact direct avec la plaque (20) de support de garniture.

8. Garniture de frein ou d'embrayage selon l'une des revendications précédentes, **caractérisée en ce que** le matériau (24) peut être placé dans la garniture de frottement (22) par l'intermédiaire d'une découpe ménagée dans la plaque de support (20).

9. Garniture de frein ou d'embrayage selon l'une des revendications précédentes, **caractérisée en ce que** pour déterminer une limite d'usure (34) de la garniture de frottement (22), au moins l'un des conducteurs électriques (32) s'étend entre le matériau (24) et une frontière d'usure (34) de la garniture de frottement.

10. Garniture de frein ou d'embrayage selon l'une des revendications précédentes, **caractérisée en ce que** deux résistances électriques (38, 40) raccordées en parallèle sont prévues dans la garniture de frottement (22), au moins une partie du conducteur (42) d'une branche du circuit parallèle s'étendant au-dessus ou dans la frontière d'usure (34) de la garniture de frottement (22) et **en ce que** le matériau (24) est disposé dans l'autre branche (44) du circuit parallèle.
